# EUROPÄISCHE PATENTSCHRIFT

(11) **EP 0 979 938 B1**
(45) Veröffentlichungstag und Bekanntmachung des Hinweises auf die Patenterteilung: **05.11.2003**
(21) Anmeldenummer: 99111711.0
(22) Anmeldetag: 17.06.1999
(51) Int. Cl.: F02M 25/07, F16K 1/44

(54) **Abgasrückführventil**
Exhaust gas recirculation valve
Vanne de recirculation des gaz d'échappement

(30) Priorität: 13.08.1998 DE 19836648
(43) Veröffentlichungstag der Anmeldung: 16.02.2000
(73) Patentinhaber: Pierburg GmbH, 41460 Neuss (DE)
(72) Erfinder: Sari, Osman, 41516 Grevenbroich (DE); Thiery, Christoph, 41564 Kaarst (DE); Blank, Helmut, 53332 Bornheim (DE); Graul, Wolfgang, 52428 Jülich (DE)

(56) Entgegenhaltungen:
- DE-A- 4 338 192
- DE-A- 19 733 964
- DE-C- 19 539 921
- US-A- 4 319 607

## Beschreibung

Die Erfindung betrifft ein Abgasrückführventil nach dem Oberbegriff des Patentanspruchs 1.

Ein derartiges Abgasrückführventil ist allgemein bekannt und ausbalanciert, d. h. die am Ventil anstehenden Druckdifferenzen haben keinen größeren Einfluß auf die Ventilstellkraft.

Ausführungsbeispiele für ein derartiges Fluidventil sind den DE 43 38 192 (A1) und DE 30 06 302 (A1) zu entnehmen.

Aus diesen Schriften sind als Fluid das Abgas und die angesaugte Brennluft einer Brennkraftmaschine angegeben, wobei diese genauestens gesteuert werden müssen, um die vorgeschriebene Schadstofflimitierung zu erreichen.

Wie aus den Druckschriften entnehmbar ist, liegt mit den dort gezeigten Ausführungen eine Überbestimmung der Ventilschließstellung vor, d. h. auch bei genauester Fertigung schließt ein Ventilschließkörper weniger, wenn der andere voll geschlossen ist. Damit erscheint die erforderliche Genauigkeit für den Einsatz bei einer Brennkraftmaschine nicht gegeben zu sein. Darüber hinaus soll eine Strömungsverbesserung am Ventil erreicht werden und eine vereinfachte Fertigung.

Hiervon ausgehend liegt der Erfindung daher die Aufgabe zugrunde, Maßnahmen aufzufinden, mit denen die Überbestimmung entfällt und eine genaueste Steuerung erreicht wird.

Diese Aufgabe ist durch die im Kennzeichen des Patentanspruchs 1 angegebenen Merkmale gelöst.

Weitere Verbesserungen lassen sich durch die mit den Unteransprüchen angegebenen Merkmale erzielen.

Als sekundärer Stand der Technik ist die US 4 3189 607 A zu nennen. Diese beschreibt ein Ventil, das insbesondere bei Wasserfiltersystemen zur Anwendung kommt, wobei beide Ventilschließkörper verschiebbar auf einer Ventilstange angeordnet sind. Ein derartiges Ventil neigt beim Einsatz als Abgasrückführventil zum Verkleben und könnte nicht mehr geöffnet werden.

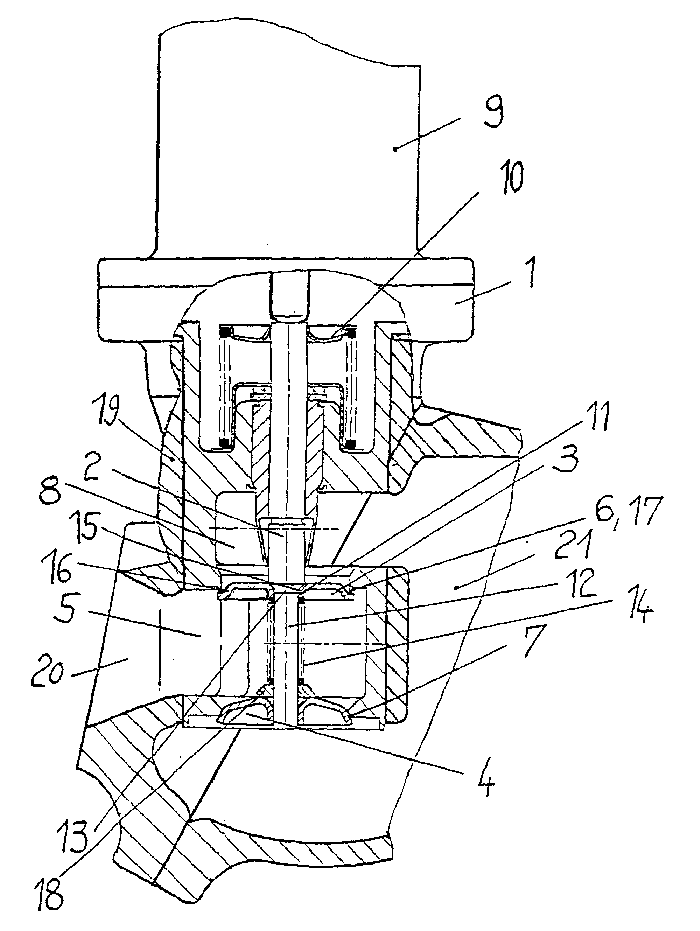

Ein Ausführungsbeispiel der Erfindung ist in der Zeichnung dargestellt und wird nachfolgend beschrieben.

Die Zeichnung zeigt einen Schnitt eines erfindungsgemäßen Fluidventils 1 mit zwei auf einer Ventilstellstange 2 angeordneten Ventilschließkörpern 3, 4, die den Fluidstrom aus einem zwischen den Ventilschließkörpern 3, 4 bestehenden Kanal 5 in einen hinter zwei Ventilsitzen 6, 7 bestehenden Kanal 8 und umgekehrt steuern.

Das Fluidventil 1 wird von einem elektromagnetischen oder pneumatischen Steller 9 betätigt und ist hier durch gleich große Wirkflächen der Ventilschließkörper 3, 4 ausbalanciert, d. h. die am Ventil anstehenden Druckdifferenzen habe keinen größeren Einfluß auf die Ventilstellkraft.

Der andere Ventilschließkörper 3 ist mit einer Durchgangsöffnung 11 im Schiebesitz auf einem Zapfen 12 der Ventilstellstange 2 aufgesteckt und stützt sich gegen einen Bundabsatz 13 der Ventilstellstange 2 unter der Kraft einer zwischen den beiden Ventilschließkörpern 3, 4 eingespannten Feder 14 ab, wobei der Bundabsatz 13 und ein Führungsabschnitt 15 der Durchgangsöffnung 11 des Ventilschließkörpers 3 so ausgeformt sind, zum Beispiel als Kugelkalotte und Pfanne oder umlaufende Hohlkehle und umlaufende Rundung, daß eine gewisse Schiefstellung des Ventilschließkörpers 3 zur Ventilstellstange 2 bzw. zum Ventilsitz 6 erreichbar ist. Diese Maßnahme ermöglicht eine absolute Dichtheit zwischen Ventilschließkörper 3 und Ventilsitz 6, da sich der Ventilschließkörper 3 genau dem Ventilsitz 6 anpassen kann, wobei vorteilhafterweise der laserverschweißte Ventilschließkörper 4 als Kegel- oder Kugelkalottenventil ausgebildet ist und mit dem entsprechend ausgebildeten Ventilsitz 7 zusammenwirkt.

Durch diese Maßnahmen zusammen kann ein gewisses Überschaltspiel erreicht werden, d.h. der federbelastete Ventilschließkörper 3 kann so eingestellt werden, daß er geringfügig eher schließt als der andere.

Dabei kann es vorteilhaft sein, wenn der federbelastete Ventilschließkörper 3 als Flachsitzventil ausgebildet ist und mit dem entsprechend ausgebildeten Ventilsitz 6 zusammenwirkt.

Durch die weiteren Maßnahmen, daß der Ventilsitz 6 eine auf einer umlaufenden Rippe 16 bestehende Dichtfläche 17 aufweist und daß diese Rippe 16 im Dichtflächenbereich spitz zusammenläuft, wird erreicht, daß die Gefahr des Ventilklebens vermindert wird und daß Rußablagerungen nicht in größerem Maß auftreten können.

Wie dargestellt, sind die Ventilschließkörper 3, 4 als Blechschalen ausgeführt, und zwischen dem laserverschweißten Ventilkörper 4 und der Feder 14 ist ein Kegelstumpfzwischenring 18 angeordnet, der einen Konuszapfen zur Verbesserung der Fluidstrom-Durchsatzcharateristik bildet.

Die Blechschalen sind vorteilhaft herzustellen und sind sehr leicht.

Insgesamt liegt mit diesem Fluidventil eine Ausführung vor, die sehr vorteilhaft in ein Gehäuse 19 einsetzbar, das einen Zuführ- und einen Abführkanal 20, 21 für ein Fluid aufweist.

Bei dem erfindungsgemäßen Fluidventil liegt eine verbesserte Dichtheit des Ventils und eine geringere Verschmutzungs- und Klemmgefahr der Ventilsitze und der Ventilschließkörper vor.
Hierdurch ist eine höhere Funktionssicherheit und verbesserte Steuerbarkeit des Fluidventils erreichbar.

## Patentansprüche

1. Abgasrückführventil mit zwei auf einer Ventilstellstange angeordneten Ventilschließkörpern, die den Fluidstrom aus einem zwischen den Ventilschließkörpern bestehenden Kanal in einen hinter zwei Ventilsitzen bestehenden Kanal und umgekehrt steuern, wobei der an einem Ende der Ventilstange angeordnete Ventilschließkörper mit der Ventilstange verschweißt ist,
**dadurch gekennzeichnet, daß**
der andere Ventilschließkörper (3) mit einer Durchgangsöffnung (11) im Schiebesitz auf einem Zapfen (12) der Ventilstange (2) aufgesteckt ist und sich gegen einen Bundansatz (13) der Ventilstellstange (2) abstützt unter der Kraft einer zwischen den beiden Ventilschließkörpern (3, 4) eingespannten Feder (14), wobei der Bundabsatz (13) und ein Führungsabschnitt (15) der Durchgangsöffnung (11) des Ventilschließkörpers (3) so ausgeformt sind, daß eine gewisse Schiefstellung des Ventilschließkörpers (3) zur Ventilstellstange (2) bzw. zum Ventilsitz (6) erreichbar ist.

2. Abgasrückführventil nach Anspruch 1, **dadurch gekennzeichnet, daß** der laserverschweißte Ventilschließkörper (4) als Kegel- oder Kugelkalottenventil ausgebildet ist und mit dem entsprechend ausgebildeten Ventilsitz (7) zusammenwirkt.

3. Abgasrückführventil nach Anspruch 1 oder 2, **dadurch gekennzeichnet, daß** der federbelastete Ventilschließkörper (3) als Flachsitzventil ausgebildet ist und mit dem entsprechend ausgebildeten Ventilsitz (6) zusammenwirkt.

4. Abgasrückführventil nach Anspruch 2, **dadurch gekennzeichnet, daß** der Ventilsitz (6) eine auf einer umlaufenden Rippe (16) bestehende Dichtfläche (17) aufweist.

5. Abgasrückführventil nach Anspruch 4, **dadurch gekennzeichnet, daß** die den Ventilsitz (6) bildende Rippe (16) im Dichtflächenbereich spitz zusammenläuft.

6. Abgasrückführventil nach einem der vorstehenden Ansprüche, **dadurch gekennzeichnet, daß** die Ventilschließkörper (3, 4) als Blechschalen ausgeführt sind.

7. Abgasrückführventil nach einem der vorstehenden Ansprüche, **dadurch gekennzeichnet, daß** zwischen dem laserverschweißten Ventilkörper (4) und der Feder (14) ein Kegelstumpfzwischenring (18) angeordnet ist.

8. Abgasrückführventil nach einem der vorstehenden Ansprüche, **dadurch gekennzeichnet, daß** die Ausführung in ein Gehäuse (19) eingesetzt ist, das einen Zuführ- und einen Abführkanal (20, 21) für ein Fluid aufweist.

## Claims

1. Exhaust gas recirculation valve comprising two valve closing bodies, which are disposed on a valve-actuating stem and direct the fluid flow from a channel situated between the valve closing bodies into a channel situated behind two valve seats and vice versa, wherein the valve closing body disposed on one end of the valve stem is welded to the valve stem,
**characterized in that**
the other valve closing body (3) is mounted by a through-opening (11) with a sliding fit on a pin (12) of the valve stem (2) and supported against a collar step (13) of the valve-actuating stem (2) under the action of a spring (14) clamped between the two valve closing bodies (3, 4), wherein the collar step (13) and a guide portion (15) of the through-opening (11) of the valve closing body (3) are configured in such a way that a specific skewing of the valve closing body (3) relative to the valve-actuating stem (2) and/or relative to the valve seat (6) is achievable.

2. Exhaust gas recirculation valve according to claim 1, **characterized in that** the laser-welded valve closing body (4) is designed as a plug- or spherical cup valve and interacts with the correspondingly designed valve seat (7).

3. Exhaust gas recirculation valve according to claim 1 or 2, **characterized in that** the spring-loaded valve closing body (3) is designed as a flat seat valve and interacts with the correspondingly designed valve seat (6).

4. Exhaust gas recirculation valve according to claim 2, **characterized in that** the valve seat (6) comprises a sealing surface (17) situated on a circumferential rib (16).

5. Exhaust gas recirculation valve according to claim 4, **characterized in that** the rib (16) forming the valve seat (6) tapers in the sealing surface region.

6. Exhaust gas recirculation valve according to one of the preceding claims, **characterized in that** the valve closing bodies (3, 4) take the form of sheet-metal shells.

7. Exhaust gas recirculation valve according to one of the preceding claims, **characterized in that** between the laser-welded valve body (4) and the spring (14) a truncated-cone-shaped intermediate ring (18) is disposed.

8. Exhaust gas recirculation valve according to one of the preceding claims, **characterized in that** the construction is inserted into a housing (19), which has a supply- and a discharge channel (20, 21) for a fluid.

## Revendications

1. Vanne de recyclage des gaz d'échappement présentant deux éléments de fermeture de vanne disposés sur une tige de positionnement de vanne, qui pilotent le flux de fluide d'un canal existant entre les deux éléments de fermeture de vanne dans un canal existant en aval de deux sièges de vanne et inversement, l'élément de fermeture de vanne situé à une extrémité de la tige de vanne étant soudé à la tige de vanne,
**caractérisée en ce que**
par une ouverture de passage (11) dans le siège coulissant, l'autre élément de fermeture de vanne (3) est enfilé sur un tenon (12) de la tige de vanne (2) et prend appui contre un décrochement (13) de la tige de positionnement de vanne (2), sous la force d'un ressort (14) tendu entre les deux éléments de fermeture de vanne (3, 4), le décrochement (13) et une section de guidage (15) de l'ouverture de passage (11) de l'élément de fermeture de vanne (3) étant conformés de telle façon qu'une certaine position inclinée de l'élément de fermeture de vanne (3) par rapport à la tige de vanne (2) ou au siège de vanne (6) peut être atteinte.

2. Vanne de recyclage des gaz d'échappement selon la revendication 1, **caractérisée en ce que** l'élément de fermeture de vanne (4) soudé au laser est conformé comme vanne conique ou en calotte sphérique et coopère avec le siège de vanne (7) conformé de manière correspondante.

3. Vanne de recyclage des gaz d'échappement selon la revendication 1 ou 2, **caractérisée en ce que** l'élément de fermeture de vanne (3) soumis à la force de ressort est conformé comme vanne à siège plat et coopère avec le siège de vanne (6) conformé de manière correspondante.

4. Vanne de recyclage des gaz d'échappement selon la revendication 2, **caractérisée en ce que** le siège de vanne (6) présente une surface d'étanchéité (17) existant sur une nervure périphérique (16).

5. Vanne de recyclage des gaz d'échappement selon la revendication 4, **caractérisée en ce que** la nervure (16) formant le siège de vanne (6) se resserre en pointe dans la zone de la surface d'étanchéité.

6. Vanne de recyclage des gaz d'échappement selon l'une des revendications précédentes, **caractérisée en ce que** les éléments de fermeture de vanne (3, 4) sont réalisés comme coques de tôle.

7. Vanne de recyclage des gaz d'échappement selon l'une des revendications précédentes, **caractérisée en ce qu'**un anneau intermédiaire tronconique (18) est disposé entre l'élément de fermeture de vanne (4) soudé au laser et le ressort (14).

8. Vanne de recyclage des gaz d'échappement selon l'une des revendications précédentes, **caractérisée en ce que** la réalisation est insérée dans un corps (19) qui présente-un canal d'alimentation et un canal d'évacuation (20, 21) pour un fluide.
